# EUROPÄISCHE PATENTSCHRIFT

(11) **EP 2 964 940 B1**
(45) Veröffentlichungstag und Bekanntmachung des Hinweises auf die Patenterteilung: **31.01.2018**
(21) Anmeldenummer: 14702613.2
(22) Anmeldetag: 05.02.2014
(51) Int. Cl.: F02G 1/043, F02G 1/044, F02G 5/02

(54) **MOTORBAUGRUPPE**
MOTOR ASSEMBLY
ENSEMBLE MOTEUR

(30) Priorität: 05.03.2013 DE 102013203683
(43) Veröffentlichungstag der Anmeldung: 13.01.2016
(73) Patentinhaber: Bayerische Motoren Werke Aktiengesellschaft, 80809 München (DE)
(72) Erfinder: FRÖSCHL, Joachim, 82211 Herrsching (DE)
(86) Internationale Anmeldenummer: PCT/EP2014/052186
(87) Internationale Veröffentlichungsnummer: WO 2014/135326

(56) Entgegenhaltungen:
- DE-A1-102009 020 417
- DE-A1-102011 109 147
- JP-A- 2004 036 499
- JP-A- 2009 167 822

## Beschreibung

Die Erfindung betrifft eine Motorbaugruppe nach dem Oberbegriff des Anspruchs 1.

Die in Verbrennungsmotoren für Fahrzeuge entstehende Wärme, wird teilweise genutzt, um durch das heiße Abgas eine Abgasreinigungsvorrichtung auf eine Betriebstemperatur zu erhitzen, die für den Betrieb der Abgasreinigungsvorrichtung erforderlich ist. Mit zunehmender Betriebsdauer wird die Abgasreinigungsvorrichtung allerding weiter erhitzt, so dass ab einer definierten Temperatur eine Kühlung der Abgasreinigungsvorrichtung erforderlich ist. Aufgrund der hohen Temperaturen ist aber eine Kühlung mit einem einfachen Kühlkreislauf, der ein Kühlmittel oder Wasserdampf enthält, nicht möglich, da beispielsweise Kühlmittel nicht für solche hohen Temperaturen ausgelegt sind.

Aus der JP 2009 167822 A, der JP 2004 036499 A und der DE 10 2011 109147 A1 sind Motorbaugruppen bekannt, bei denen mit der Wärme eines Abgasstroms eines Verbrennungsmotors ein Stirling-Motor betrieben wird. Ferner zeigt die DE 10 2009 020417 A1 einen thermoelektrischen Wandler, der die Wärme von Abgasen nutzen kann.

Aufgabe der Erfindung ist es, eine Motorbaugruppe bereitzustellen, die eine effektive Kühlung der Abgasreinigungsvorrichtung sowie eine bessere Ausnutzung der vom Motor erzeugten Wärme ermöglicht.

Zur Lösung der Aufgabe ist bei einer Motorbaugruppe der eingangs genannten Art vorgesehen, dass der Verbrennungsmotor eine Abgasreinigungsvorrichtung aufweist und die Überströmleitung zumindest abschnittsweise durch die Abgasreinigungsvorrichtung geführt ist, wobei ein Wärmeaustausch zwischen Abgasreinigungsvorrichtung und dem in der Überströmleitung strömenden Gas erfolgt. Die Wärmekraftmaschine funktioniert nach dem Prinzip eines Stirlingmotors, wobei das Gas bei einer Bewegung des zumindest einen Kolbens durch die Überströmleitung zwischen dem Heizbereich und dem Kühlbereich strömt. Die durch die Abgasreinigungsvorrichtung geführte Überströmleitung funktioniert gewissermaßen als Wärmetauscher. Das durch die Überströmleitung strömende Gas kann also Wärme von der Abgasreinigungsvorrichtung aufnehmen oder Wärme an diese abgeben. Beim Start des Verbrennungsmotors kann dadurch die Abgasreinigungsvorrichtung beispielsweise durch eine Wärmeabgabe schneller aufgeheizt werden, sodass diese schneller ihre Betriebstemperatur erreicht. Hat die Abgasreinigungsvorrichtung ihre Betriebstemperatur erreicht, kann das Gas überschüssige Wärme aufnehmen und von der Abgasreinigungsvorrichtung wegführen, also die Abgasreinigungsvorrichtung kühlen und so einen Temperaturanstieg der Abgasreinigungsvorrichtung verhindern oder zumindest verzögern. Diese Art der Kühlung mittels eines Stirlingmotors bietet den Vorteil, dass eine solche Wärmekraftmaschine auch mit sehr hohen Temperaturen betrieben werden kann.

Der erste und/oder der zweite Kolben sind bzw. ist magnetisch ausgebildet, und es ist eine elektrische Spule vorgesehen, die den ersten und/oder den zweiten Zylinder zwischen Ausgangposition und Expansionsposition in Umfangsrichtung umschließt. Wird der Kolben im Arbeitsraum bewegt, wird dadurch in der Spule ein Induktionsstrom erzeugt, sodass durch die mechanische Arbeit des Kolbens Strom erzeugt werden kann.

Die Heizeinrichtung für die Wärmekraftmaschine bzw. den ersten Endabschnitt des Arbeitsraumes der Wärmekraftmaschine kann beispielsweise durch den Verbrennungsmotor und/oder die Abgasreinigungsvorrichtung gebildet sein. Die Wärme des Verbrennungsmotors und/oder der Abgasreinigungsvorrichtung kann dadurch effektiv genutzt werden, und es ist keine zusätzliche Energiequelle für die Wärmekraftmaschine erforderlich. Somit erfolgt eine energiesparende Kühlung der Abgasreinigungsvorrichtung.

Die Überströmleitung kann sich beispielsweise innerhalb der Abgasreinigungsvorrichtung in mehrere Teilleitungen verzweigen, sodass aufgrund der größeren Oberfläche zwischen Abgasreinigungsvorrichtung und Überströmleitung ein wesentlich besserer Wärmeaustausch zwischen Abgasreinigungsvorrichtung und dem durch die Überströmleitung strömenden Gas erfolgen kann.

Die Überströmleitung bzw. die Teilleitungen können beliebig durch die Abgasreinigungsvorrichtung geführt sein, um einen möglichst guten Wärmeaustausch zwischen Überströmleitung bzw. Teilleitungen und Abgasreinigungsvorrichtung zu erzielen. Die Überströmleitung oder die Teilleitungen sind vorzugsweise in Strömungsrichtung durch die Abgasreinigungsvorrichtung geführt, sodass ein Wärmeaustausch über eine möglichst lange Strecke möglich ist.

Das Gas kann beispielsweise vom Heizbereich in den Kühlbereich in Strömungsrichtung der Abgasreinigungsvorrichtung durch die Überströmleitung strömen.

Es ist aber auch denkbar, dass das Gas vom Heizbereich in den Kühlbereich entgegen der Strömungsrichtung der Abgasreinigungsvorrichtung durch die Überströmleitung strömt, wodurch ein besserer Wärmeaustausch bzw. eine bessere Wärmeabfuhr von der Abgasreinigungsvorrichtung erfolgen kann.

Optional ist es aber auch denkbar, dass die Überströmleitung oder Teilleitungen der Überströmleitung im Wesentlichen quer zur Strömungsrichtung der Abgasreinigungsvorrichtung durch diese geführt sind.

In einer ersten Ausführungsform ist die Heizeinrichtung dem ersten Zylinder und die Kühleinrichtung dem zweiten Zylinder zugeordnet. Der Heizbereich ist im ersten Zylinder und der Kühlbereich im zweiten Zylinder vorgesehen. Dieser Aufbau entspricht einer herkömmlichen Stirlingmaschine mit einem Arbeitskolben und einem Verdrängerkolben, wobei je nach Aufbau der Stirlingmaschine der erste oder der zweite Kolben der Arbeitskolben und der jeweils andere Kolben den Verdrängerkolben darstellt.

In einer zweiten Ausführungsform sind am ersten Zylinder ein erster Heizbereich, ein erster Kühlbereich sowie eine erste Überströmleitung, die den ersten Heizbereich und den ersten Kühlbereich strömungstechnisch miteinander verbindet, und am zweiten Zylinder ein zweiter Heizbereich, ein zweiter Kühlbereich sowie eine zweite Überströmleitung, die den zweiten Heizbereich und den zweiten Kühlbereich strömungstechnisch miteinander verbindet, vorgesehen, wobei die Überströmleitungen jeweils so angeordnet sind, dass nur in der Expansionsstellung der Kolben eine strömungstechnische Verbindung zwischen dem Heizbereich und Kühlbereich hergestellt ist. Insbesondere sind der erste und der zweite Zylinder in Längsrichtung hintereinander angeordnet, und die Kühlbereiche oder die Heizbereiche grenzen aneinander an. In dieser Ausführungsform sind gewissermaßen zwei Stirlingmaschinen ineinander integriert, wobei der Arbeitskolben und der Verdrängerkolben der ersten Stirlingmaschine den Verdrängerkolben und den Arbeitskolben der zweiten Stirlingmaschine bilden. Dieser Aufbau bietet den Vorteil, dass für die aneinander angrenzenden Kühlbereiche oder Heizbereiche nur eine gemeinsame Kühleinrichtung oder Heizeinrichtung erforderlich ist, wodurch eine bessere Ausnutzung der Kühlleistung oder Wärmeleistung möglich ist. Der erste Zylinder bildet in dieser Ausführungsform gemeinsam mit der ersten Überströmleitung einen ersten, geschlossenen Arbeitsraum, der zweite Zylinder mit der zweiten Überströmleitung einen vom ersten Arbeitsraum getrennten zweiten Arbeitsraum.

Bei dieser Ausführungsform können die Kolben zusätzlich so ausgerichtet sein, dass sich die Magnetfelder der Kolben abstoßen. Dies bietet zusätzlich den Vorteil, dass die Kolben über die Magnetfelder gekoppelt sind, so dass einer der Kolben, der gegen den Verbindungsbereich beider Zylinder bewegt wird, den jeweils anderen Kolben weg drängt.

Weitere Vorteile und Merkmale ergeben sich aus der nachfolgenden Beschreibung in Verbindung mit den beigefügten Zeichnungen. In diesen zeigen:
- Figur 1 eine Wärmekraftmaschine einer Motorbaugruppe gemäß dem Oberbegriff des Anspruchs 1,
- Figur 2 eine erste Ausführungsform einer erfindungsgemäßen Motorbaugruppe,
- Figur 3 eine zweite Ausführungsform einer erfindungsgemäßen Motorbaugruppe,
- Figur 4 eine dritte Ausführungsform einer erfindungsgemäßen Motorbaugruppe, und
- Figur 5 eine vierte Ausführungsform einer erfindungsgemäßen Motorbaugruppe.

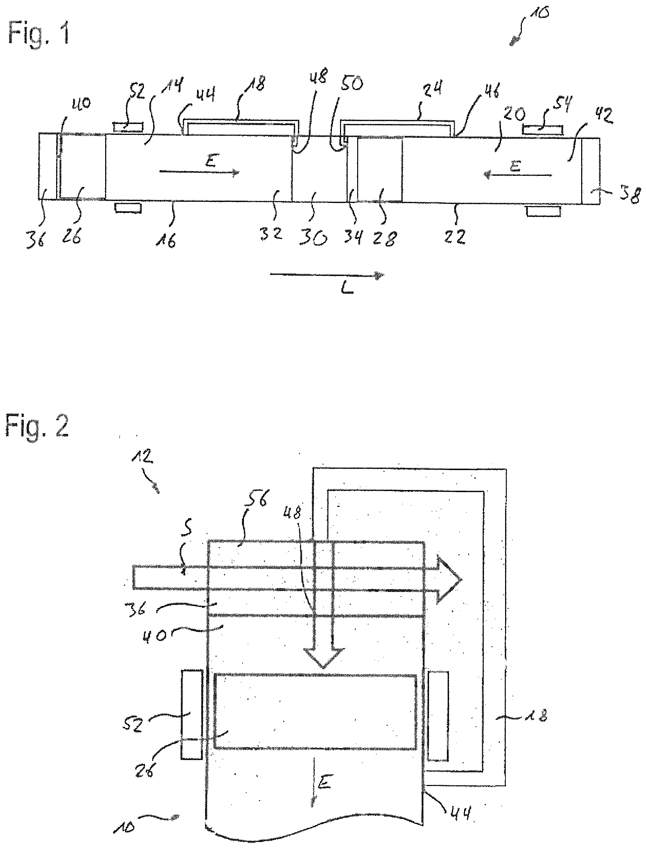

In Figur 1 ist Wärmekraftmaschine 10 für eine in Figur 2 gezeigte Motorbaugruppe 12 gezeigt, die nach dem Prinzip einer Stirlingmaschine funktioniert.

Die Wärmekraftmaschine 10 hat einen ersten abgeschlossenen, gasgefüllten Arbeitsraum 14, der durch einen ersten Zylinder 16 sowie eine erste Überströmleitung 18 gebildet ist, sowie einen zweiten abgeschlossenen, gasgefüllten Arbeitsraum 20 der durch einen zweiten Zylinder 22 sowie eine zweite Überströmleitung 24 gebildet ist. Die Zylinder 16, 22 sind in Längsrichtung L hintereinander und unmittelbar aneinander angrenzend angeordnet.

Im ersten Zylinder 16 ist ein erster Kolben 26, im zweiten Zylinder 22 ein zweiter Kolben 28 in Längsrichtung verschiebbar gelagert.

Zwischen den Zylindern 16, 22 ist eine gemeinsame Kühleinrichtung 30 vorgesehen, die das Gas in den Arbeitsräumen 14, 20 jeweils in einem Kühlbereich 32, 34 abkühlen kann. An den entgegengesetzten Enden der Zylinder 16, 22 ist jeweils eine Heizeinrichtung 36, 38 vorgesehen, die das Gas in jeweils einem Heizbereich 40, 42 erwärmen kann.

Die Kolben 26, 28 können jeweils in einer Expansionsrichtung E von einer Ausgangsposition an den voneinander entfernten Enden der Zylinder 16, 22 bzw. in den Heizbereichen 40, 42 in eine Expansionsposition in die Mitte bzw. in Richtung zu den entgegengesetzten Kühlbereichen 32, 34 bewegt werden. Beide Kolben 18, 20 sind magnetisch und so ausgebildet, dass sich die Magnetfelder der Kolben 26, 28 gegenseitig abstoßen.

Die Überströmleitungen 18, 24 münden jeweils mit einem ersten Ende 44, 46 ca. in der Mitte der Zylinder 16, 22 in diese. Die zweiten Enden 48, 50 münden jeweils in die Kühlbereiche 32, 34 der Zylinder 16, 22.

An beiden Zylinder 16, 22 ist im Bereich zwischen der Ausgangposition und der Expansionsposition der Kolben 26, 28 jeweils eine elektrische Spule 52, 54 vorgesehen, die den jeweiligen Zylinder 16, 22 in Umfangsrichtung umschließt.

Die Wärmekraftmaschine 10 arbeitet nach dem Prinzip eines Stirlingmotors.

In Figur 1 befindet sich der erste Kolben 26 in der Ausgangsposition, der zweite Kolben 28 befindet sich in der Expansionsposition.

Durch die erste Heizeinrichtung 36 wird das Gas im ersten Heizbereich 40 des ersten Zylinders 16 erwärmt und dehnt sich aus. Die erste Kühleinrichtung 30 kühlt gleichzeitig das Gas im ersten Kühlbereich 32, das durch die niedrigere Temperatur sein Volumen reduziert. Durch den ansteigenden Druck im ersten Heizbereich 40 und den reduzierten Druck im ersten Kühlbereich wird der erste Kolben 26 in Expansionsrichtung E bewegt.

Sobald der erste Kolben 26 das erste Ende 44 der ersten Überströmleitung 18 passiert hat und der erste Kolben in der Expansionsposition angelangt ist, ist eine strömungstechnische Verbindung zwischen dem Heizbereich 40 und dem Kühlbereich 32 hergestellt. Aufgrund des höheren Drucks im Heizbereich 40 strömt das Gas vom ersten Heizbereich 40 in den ersten Kühlbereich 32, bis ein Druckausgleich zwischen diesen hergestellt ist.

Ist der erste Kolben 26 in der Ausgangsposition, befindet sich der zweite Kolben 28 in der Expansionsstellung, in der über den zweiten Strömungskanal ein Druckausgleich zwischen dem zweiten Kühlbereich 34 und dem zweiten Heizbereich 42 erfolgen kann.

Wird der erste Kolben 26 aufgrund des ansteigenden Drucks im ersten Heizbereich 40 in die Expansionsposition gedrängt, wird der zweite Kolben aufgrund der sich abstoßenden Magnetfelder der beiden Kolben 26, 28 von der Expansionsposition entgegen der Expansionsrichtung E in die Ausgangsposition gedrängt.

Sobald der zweite Kolben 28 aus der Expansionsposition in die Ausgangsposition bewegt wird, wird dieser vor das erste Ende 50 der zweiten Überströmleitung 24 und an diesem vorbei verschoben, so dass kein Druckausgleich zwischen dem zweiten Kühlbereich 34 und dem zweiten Heizbereich 42 erfolgen kann.

Die Magnetfelder der Kolben 26, 28 sind so ausgebildet, dass bei einer Bewegung des ersten Kolbens 26 in die Expansionsstellung der zweite Kolben 28 bis in die Ausgangsposition gedrängt wird.

Ist der zweite Kolben 28 in der Ausgangsposition angelangt, wird das Gas im zweiten Heizbereich 42 erwärmt, wodurch sich dieses ausdehnt. Gleichzeitig wird das Gas im zweiten Kühlbereich 34 gekühlt und verringert sein Volumen. Durch den ansteigenden Druck im zweiten Heizbereich 40 und den reduzierten Druck im zweiten Kühlbereich 34 wird der zweite Kolben 26 wieder zurück in Expansionsrichtung gedrängt. Da sich die Kolben 26, 28 abstoßen, wird dadurch der erste Kolben zurück in die Ausgansstellung gedrängt.

Durch das Erwärmen der Heizbereiche 40, 42 und das Kühlen der Kühlbereiche 32, 34 ergibt sich in Kombination mit der Koppelung der Kolben 26, 28, die in dieser Ausführungsform durch die Magnetfelder der Kolben 26, 28 erfolgt, eine oszillierende Bewegung der Kolben 26, 28.

Da die Kolben 26, 28 magnetisch ausgebildet sind, wird durch diese Bewegung in den elektrischen Spulen 52, 54 ein Induktionsstrom erzeugt, der für verschiedene Verbraucher im Fahrzeug genutzt werden kann. Zudem kann die Bewegung der Kolben 26, 28 durch Anlegen einer Spannung an einer der Spulen 52, 54 initiiert werden.

Das durch die Überströmleitungen 18, 24 strömende Gas kann zudem zur Temperaturregulierung einer Abgasreinigungsvorrichtung 56 eines nicht näher dargestellten Verbrennungsmotors der in Figur 2 gezeigten Motorbaugruppe 12 genutzt werden.

Aus Gründen der Übersichtlichkeit ist in Figur 2 lediglich der erste Arbeitsraum 14 der Wärmekraftmaschine 10 gezeigt. In der hier gezeigten Ausführungsform verläuft die Überströmleitung 18 quer zur Strömungsrichtung S der Abgasreinigungseinrichtung 56 durch diese. Auch die zweite Überströmleitung 24 kann durch die Abgasreinigungsanlage 56 geführt sein.

Die Heizeinrichtung 36 der Wärmekraftmaschine 10 ist in dieser Ausführungsform zudem durch die Abgasreinigungsvorrichtung 56 gebildet.

Innerhalb der Abgasreinigungsvorrichtung 56 kann sich die Überströmleitung 18 in mehrere Teilleitungen verzweigen, wobei der Durchmesser der Teilleitungen gegenüber der Überströmleitung 18 reduziert sein kann.

Im regulären Betrieb des Verbrennungsmotors entstehen in der Abgasreinigungsvorrichtung 56 durch das aus dem Verbrennungsmotor ausströmende Abgas sehr hohe Temperaturen, die unter anderem für die Funktion der Abgasreinigungsvorrichtung 56 erforderlich sind. Diese Wärme kann auch für die Wärmekraftmaschine 10 genutzt werden. Die Heizeinrichtungen 36, 38 sind also durch die Abgasreinigungsanlage 56 gebildet. Somit ist keine zusätzliche Heizeinrichtung erforderlich.

Die Überströmleitung 18 ist so durch die Abgasreinigungsvorrichtung 56 verlegt, dass das durch die Überströmleitung 18 strömende Gas der Wärmekraftmaschine 10 die an der Abgasreinigungsvorrichtung 56 entstehende Wärme aufnehmen und abführen kann.

Der Vorteil dieser Anordnung liegt darin, dass bei sehr hohen Temperaturen der Abgasreinigungsvorrichtung 56, die zu einer ineffektiven Abgasreinigung oder eine Beschädigung der Abgasreinigungsvorrichtung 56 führen könnten, durch die Wärmekraftmaschine 10 bzw. die Überströmleitung 18 eine Temperaturregulierung, insbesondere eine Kühlung bzw. eine Wärmeabfuhr von der Abgasreinigungsvorrichtung 56 durch die Wärmeübertragung auf das durchströmende Gas möglich ist.

Da eine Wärmekraftmaschine 10 mit sehr hohen Temperaturen betrieben werden kann, ist eine wesentlich effektivere Wärmeabfuhr von der Abgasreinigungsvorrichtung 56 möglich, als dies beispielsweise mit Wasserdampf oder andere Kühlmitteln möglich ist.

Da die Heizeinrichtung 30 durch die Abgasreinigungsvorrichtung 56 gebildet ist, ist zudem keine zusätzliche Energiequelle für die Wärmekraftmaschine 10 erforderlich.

Dadurch kann die an der Abgasreinigungsvorrichtung 56 entstehende Wärme zusätzlich genutzt werden, um über die Wärmekraftmaschine 10 bzw. die Spulen 52, 54 und die magnetischen Kolben 26, 28 Strom zu erzeugen, der für verschiedene Verbraucher im Fahrzeug genutzt werden kann.

Die Überströmleitungen 18, 24 können je nach gewünschter Kühlleistung bzw. Wärmeaustauschleistung beliebig durch die Abgasreinigungsvorrichtung 56 geführt werden.

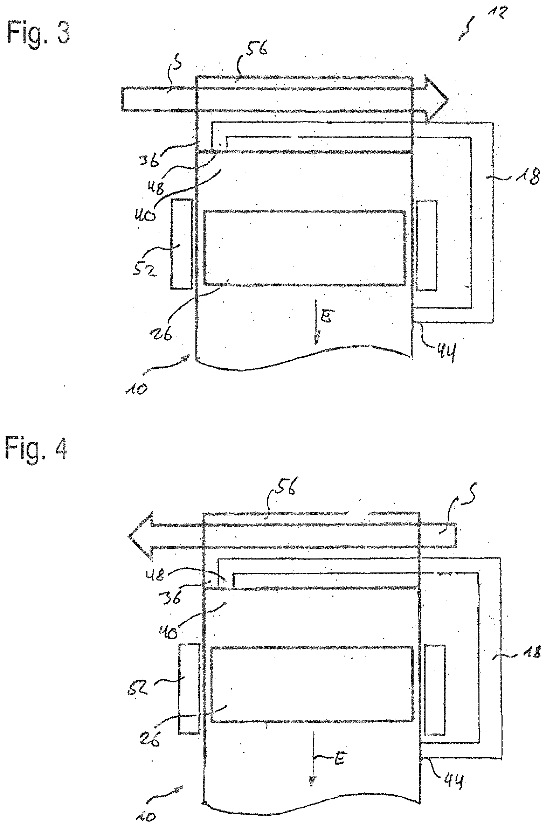

Eine zweite Ausführungsform einer erfindungsgemäßen Motorbaugruppe 12 ist in Figur 3 gezeigt. Der Aufbau dieser Motorbaugruppe 12 entspricht im Wesentlichen der in Figur 2 gezeigten Motorbaugruppe 12. Die Überströmleitung 18 ist hier allerdings nicht quer zur Strömungsrichtung S der Abgasreinigungsvorrichtung 56, sondern in Strömungsrichtung S der Abgasreinigungsvorrichtung 56 verlegt, wobei das Gas vom ersten Kühlbereich 32 in den ersten Heizbereich 40 in Strömungsrichtung S strömt. Da das Gas somit eine längere Strecke innerhalb der Abgasreinigungsvorrichtung 56 zurücklegt, ist eine wesentlich höhere Wärmeaufnahme des Gases möglich, sodass der Wärmeaustausch wesentlich effektiver erfolgen kann.

Die in Figur 4 gezeigte Ausführungsform entspricht im Wesentlichen der in Figur 3 gezeigten Ausführungsform, wobei das Gas in entgegengesetzter Richtung, also entgegen der Strömungsrichtung S vom ersten Kühlbereich 32 in den ersten Heizbereich 40 strömt.

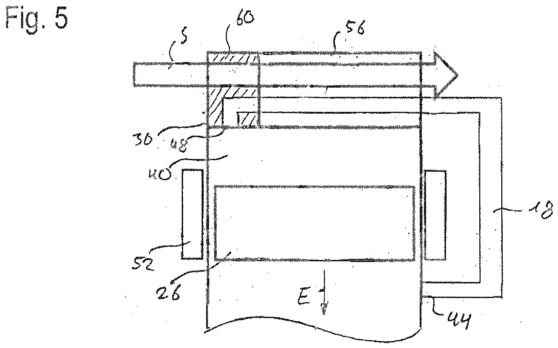

Eine vierte Ausführungsform ist in Figur 5 gezeigt, wobei in dieser Ausführungsform in Strömungsrichtung S vor der Abgasreinigungsvorrichtung 56 ein zusätzlicher Wärmetauscher 60 vorgesehen ist, und die Überströmleitung 18 auch durch den Wärmetauscher 60 geführt ist.

Unabhängig von der Ausführungsform der Wärmekraftmaschine bzw. des Stirlingmotors verläuft jeweils die Überströmleitung 18, 24 durch die Abgasreinigungsvorrichtung 56, sodass ein Wärmeaustausch zwischen Abgasreinigungsvorrichtung 56 und dem in der Überströmleitung 18 strömenden Gas erfolgen kann.

In der gezeigten Ausführungsform erfüllen die Kolben 26, 28 jeweils eine Doppelfunktion als Antriebskolben und Verdrängerkolben einer Stirlingmaschine. Es ist aber auch denkbar, dass die Wärmekraftmaschine 10 einen einfacheren Aufbau mit nur einer Heizeinrichtung 36, 38 und einer Kühleinrichtung 30 aufweisen. In einer solchen Ausführungsform ist die Heizeinrichtung 36 einem Kolben 26, 28 zugeordnet, die Kühleinrichtung 30 dem jeweils andere Kolben 26, 28. Der Überströmkanal verbindet beide Zylinder 16, 22 bzw. den Heizbereich und den Kühlbereich, die jeweils in einem der Zylinder 16, 22 angeordnet sind, so dass die Wärmekraftmaschine nur einen Arbeitsraum 14, 20 aufweist. Die Kolben können in einer solchen Ausführungsform auch, unabhängig von einer Spule 52, 54, mechanisch miteinander gekoppelt sein.

Die Motorbaugruppe kann also eine beliebige Wärmekraftmaschine 10 aufweisen, die nach dem Prinzip einer Stirlingmaschine arbeitet und mindestens einen Überströmkanal 18, 24 aufweist, der durch die Abgasreinigungsvorrichtung 56 geführt ist.

## Patentansprüche

1. Motorbaugruppe (12) für ein Fahrzeug,
mit einem Verbrennungsmotor und einer Wärmekraftmaschine (10), wobei die Wärmekraftmaschine (10) zumindest einen mit einem Gas gefüllten, abgeschlossenen Arbeitsraum (14, 20) aufweist, mit einem ersten Zylinder (16), in dem ein erster Kolben (26) in Längsrichtung (L) zwischen einer Ausgangsposition und einer Expansionsposition verschiebbar gelagert ist, und einem zweiten Zylinder (22), in dem ein zweiter Kolben (28) in Längsrichtung (L) zwischen einer Ausgangsposition und einer Expansionsposition verschiebbar gelagert ist, zumindest einer Heizeinrichtung (36, 38) zum Erwärmen des Gases in zumindest einem Heizbereich (40, 42) des Arbeitsraumes (14, 20) und zumindest einer Kühleinrichtung (30) zum Kühlen des Gases in zumindest einem Kühlbereich (32, 34) des Arbeitsraumes (14, 20), sowie zumindest einer Überströmleitung (18, 24), die den zumindest einen Heizbereich (40, 42) und den zumindest einen Kühlbereich (32, 34) strömungstechnisch verbindet, wobei das im Heizbereich (40, 42) erwärmte Gas den ersten Kolben (26) von einer Ausgangsposition in eine Expansionsposition drängen und anschließend durch die Überströmleitung (18, 24) in den Kühlbereich (32, 34) strömen und den zweiten Kolben (28) in die Expansionsposition drängen kann, und wobei der erste Kolben (26) und der zweite Kolben (28) derart gekoppelt sind, dass der zweite Kolben (28) zeitversetzt zum ersten Kolben (26) von der Ausgangsposition in die Expansionsposition bewegt wird, und dass bei einer Bewegung des zweiten Kolbens (28) von die Ausgangsposition in die Expansionsposition der erste Kolben (26) in Richtung der Ausgangsposition bewegt wird, wobei der erste und/oder der zweite Kolben (26, 28) magnetisch ausgebildet sind bzw. ist und eine elektrische Spule (52, 54) vorgesehen ist, die den ersten und/oder den zweiten Zylinder (16, 22) zwischen Ausgangposition und Expansionsposition in Umfangsrichtung umschließt, **dadurch gekennzeichnet, dass** der Verbrennungsmotor eine Abgasreinigungsvorrichtung (56) aufweist und die Überströmleitung (18, 24) zumindest abschnittsweise durch die Abgasreinigungsvorrichtung (56) geführt ist, wobei ein Wärmeaustausch zwischen der Abgasreinigungsvorrichtung (56) und dem in der Überströmleitung (18, 24) strömenden Gas erfolgt.

2. Motorbaugruppe nach Anspruch 1, **dadurch gekennzeichnet, dass** der Verbrennungsmotor und/oder die Abgasreinigungsvorrichtung (56) die Heizeinrichtung (36, 38) bilden.

3. Motorbaugruppe nach einem der Ansprüche 1 und 2, **dadurch gekennzeichnet, dass** sich die Überströmleitung (18, 24) innerhalb der Abgasreinigungsvorrichtung (56) in mehrere Teilleitungen verzweigt.

4. Motorbaugruppe nach einem der vorhergehenden Ansprüche, **dadurch gekennzeichnet, dass** die Überströmleitung (18, 24) oder Teilleitungen der Überströmleitung (18, 24) in Strömungsrichtung (S) durch die Abgasreinigungsvorrichtung (56) geführt ist.

5. Motorbaugruppe nach Anspruch 4, **dadurch gekennzeichnet, dass** das Gas vom Heizbereich (40, 42) in den Kühlbereich (32, 34) in oder entgegen der Strömungsrichtung (S) der Abgasreinigungsvorrichtung (56) durch die Überströmleitung (18, 24) strömt.

6. Motorbaugruppe nach einem der vorhergehenden Ansprüche, **dadurch gekennzeichnet, dass** die Überströmleitung (18, 24) oder Teilleitungen der Überströmleitung (18, 24) quer zur Strömungsrichtung (S) der Abgasreinigungsvorrichtung (56) durch die Abgasreinigungsvorrichtung (56) geführt ist.

7. Motorbaugruppe nach einem der vorhergehenden Ansprüche, **dadurch gekennzeichnet, dass** die Heizeinrichtung (36, 38) dem ersten Zylinder (16) und die Kühleinrichtung (30) dem zweiten Zylinder (22) zugeordnet und der Heizbereich (36, 38) im ersten Zylinder (16) und der Kühlbereich (32, 34) im zweiten Zylinder (22) vorgesehen sind.

8. Motorbaugruppe nach einem der Ansprüche 1 bis 7, **dadurch gekennzeichnet, dass** am ersten Zylinder (16) ein erster Heizbereich (40), ein erster Kühlbereich (32) sowie eine erste Überströmleitung (18), die den ersten Heizbereich (40) und den ersten Kühlbereich (32) strömungstechnisch miteinander verbindet, und am zweiten Zylinder (22) ein zweiter Heizbereich (42), ein zweiter Kühlbereich (34) sowie eine zweite Überströmleitung (24), die den zweiten Heizbereich (42) und den zweiten Kühlbereich (34) strömungstechnisch miteinander verbindet, vorgesehen sind, wobei die Überströmleitungen (18, 24) jeweils so angeordnet sind, dass nur in der Expansionsstellung der Kolben (26, 28) eine strömungstechnische Verbindung zwischen den Heizbereichen (40, 42) und den Kühlbereichen (32, 34) hergestellt ist, wobei der erste und der zweite Zylinder (16, 22) in Längsrichtung (L) hintereinander angeordnet sind und die Kühlbereiche (32, 34) oder die Heizbereiche (40, 42) aneinander angrenzen.

## Claims

1. An engine assembly (12) for a vehicle,
with an internal combustion engine and a thermal engine (10), wherein the thermal engine (10) has at least one closed-off working chamber (14, 20) which is filled with a gas, with a first cylinder (16) in which a first piston (26) is mounted so as to be displaceable in the longitudinal direction (L) between a starting position and an expansion position, and with a second cylinder (22) in which a second piston (28) is mounted so as to be displaceable in the longitudinal direction (L) between a starting position and an expansion position, with at least one heating device (36, 38) for heating the gas in at least one heating region (40, 42) of the working chamber (14, 20) and at least one cooling device (30) for cooling the gas in at least one cooling region (32, 34) of the working chamber (14, 20), and also with at least one transfer line (18, 24) which fluidically connects the at least one heating region (40, 42) and the at least one cooling region (32, 34), wherein the gas heated in the heating region (40, 42) can urge the first piston (26) from a starting position into an expansion position and then flow through the transfer line (18, 24) into the cooling region (32, 34) and can urge the second piston (28) into the expansion position, and wherein the first piston (26) and the second piston (28) are coupled in such a way that the second piston (28) is moved from the starting position into the expansion position with a delay over the first piston (26), and that upon a movement of the second piston (28) from the starting position into the expansion position the first piston (26) is moved in the direction of the starting position, wherein the first and/or the second piston (26, 28) is or are magnetic and an electrical coil (52, 54) is provided which surrounds the first and/or the second cylinder (16, 22) between the starting position and expansion position in the peripheral direction, **characterised in that** the internal combustion engine has an emission control device (56) and the transfer line (18, 24) leads at least in portions through the emission control device (56), with a heat exchange taking place between the emission control device (56) and the gas flowing in the transfer line (18, 24).

2. An engine assembly according to Claim 1, **characterised in that** the internal combustion engine and/or the emission control device (56) form(s) the heating device (36, 38).

3. An engine assembly according to one of Claims 1 and 2, **characterised in that** the transfer line (18, 24) branches into a plurality of partial lines within the emission control device (56).

4. An engine assembly according to one of the preceding claims, **characterised in that** the transfer line (18, 24) or partial lines of the transfer line (18, 24) lead(s) in the direction of flow (S) through the emission control device (56).

5. An engine assembly according to Claim 4, **characterised in that** the gas flows from the heating region (40, 42) into the cooling region (32, 34) through the transfer line (18, 24) in or counter to the direction of flow (S) of the emission control device (56).

6. An engine assembly according to one of the preceding claims, **characterised in that** the transfer line (18, 24) or partial lines of the transfer line (18, 24) lead(s) through the emission control device (56) transversely to the direction of flow (S) of the emission control device (56).

7. An engine assembly according to one of the preceding claims, **characterised in that** the heating device (36, 38) is associated with the first cylinder (16) and the cooling device (30) is associated with the second cylinder (22), and the heating region (36, 38) is provided in the first cylinder (16) and the cooling region (32, 34) is provided in the second cylinder (22).

8. An engine assembly according to one of Claims 1 to 7, **characterised in that** a first heating region (40), a first cooling region (32) and a first transfer line (18) which fluidically connects the first heating region (40) and the first cooling region (32) together is provided on the first cylinder (16), and a second heating region (42), a second cooling region (34) and a second transfer line (24) which fluidically connects the second heating region (42) and the second cooling region (34) together is provided on the second cylinder (22), the transfer lines (18, 24) being arranged in each case such that a fluidic connection between the heating regions (40, 42) and the cooling regions (32, 34) is produced only in the expansion position of the pistons (26, 28), with the first and the second cylinder (16, 22) being arranged in series in the longitudinal direction (L) and the cooling regions (32, 34) or the heating regions (40, 42) adjoining one another.

## Revendications

1. Ensemble moteur (12) destiné à un véhicule comprenant :
un moteur à combustion interne et une machine thermique (10), la machine thermique (10) comprenant au moins une chambre de travail fermée (14, 20) remplie de gaz équipée d'un premier cylindre (16) dans lequel est logé un premier piston (26) mobile en translation en direction longitudinale (L) entre une position de départ et une position de détente, et d'un second cylindre (22) dans lequel est logé un second piston (28), mobile en translation en direction longitudinale (L) entre une position de départ et une position de détente, d'au moins un dispositif de chauffage (36, 38) permettant de chauffer le gaz dans au moins une zone de chauffage (40, 42) de la chambre de travail (14, 20) et d'au moins un dispositif de refroidissement (30) permettant de refroidir le gaz dans au moins une zone de refroidissement (32, 34) de la chambre de travail (14, 20), ainsi que d'au moins une conduite de trop plein (18, 24) qui relie fluidiquement la zone de chauffage (40, 42) et la zone de refroidissement (32, 34), le gaz chauffé dans la zone de chauffage (40, 42) pouvant pousser le premier piston (26) de la position de départ à la position de détente et s'écouler ensuite par la conduite de trop plein (18, 24) dans la zone de refroidissement (32, 34), et pousser le second piston (28) dans la position de détente, le premier piston (26) et le second piston (28) étant couplés de sorte que le second piston (28) soit déplacé de la position de départ à la position de détente avec un décalage dans le temps par rapport au premier piston (26), et que, lors d'un déplacement du second piston (28) de la position de départ à la position de détente, le premier piston (26) soit déplacé en direction de la position de départ, le premier piston et/ou le second piston (26, 28) étant magnétique(s) et une bobine électrique (52, 54) étant prévue, cette bobine électrique entourant le premier cylindre et/ou le second cylindre (16, 22) entre la position de départ et la position de détente, en direction périphérique,
**caractérisé en ce que**
le moteur à combustion interne comporte un dispositif d'épuration des gaz d'échappement (56), et la conduite de trop plein (18, 24) passe au moins par segments au travers du dispositif d'épuration des gaz d'échappement (56), un échange de chaleur étant effectué entre le dispositif d'épuration des gaz d'échappement (56) et le gaz circulant dans la conduite de trop plein (18, 24).

2. Ensemble moteur conforme à la revendication 1,
**caractérisé en ce que**
le moteur à combustion interne et/ou le dispositif d'épuration des gaz d'échappement (56) forme(nt) le dispositif de chauffage (36, 38).

3. Ensemble moteur conforme à l'une des revendications 1 et 2,
**caractérisé en ce que**
la conduite de trop plein (18, 24) se subdivise en plusieurs conduites partielles à la partie interne du dispositif d'épuration des gaz d'échappement (56).

4. Ensemble moteur conforme à l'une des revendications précédentes,
**caractérisé en ce que**
la conduite de trop plein (18, 24) ou les conduites partielles de la conduite de trop plein (18, 24) passe(nt) au travers du dispositif d'épuration des gaz d'échappement (56) dans la direction de circulation (S).

5. Ensemble moteur conforme à la revendication 4,
**caractérisé en ce que**
le gaz circule dans la conduite de trop plein (18, 24) de la zone de chauffage (40, 42) à la zone de refroidissement (32, 34) dans la direction d'écoulement ou dans la direction opposée à la direction d'écoulement (S) du dispositif d'épuration des gaz d'échappement (56).

6. Ensemble moteur conforme à l'une des revendications précédentes,
**caractérisé en ce que**
la conduite de trop plein (18, 24) ou les conduites partielles de la conduite de trop plein (18, 24) passe(nt) au travers du dispositif d'épuration des gaz d'échappement (56) transversalement à la direction de circulation (S) du dispositif d'épuration des gaz d'échappement (56).

7. Ensemble moteur conforme à l'une des revendications précédentes,
**caractérisé en ce que**
le dispositif de chauffage (36, 38) est associé au premier cylindre (16) et le dispositif de refroidissement (30) est associé au second cylindre (22), et la zone de chauffage (36, 38) est située dans le premier cylindre (16) tandis que la zone de refroidissement (32, 34) est située dans le second cylindre (22),

8. Ensemble moteur conforme à l'une des revendications 1 à 7,
**caractérisé en ce qu'**
il est prévu sur le premier cylindre (16), une première zone de chauffage (40), une première zone de refroidissement (32) ainsi qu'une première conduite de trop plein (18) qui relie fluidiquement la première zone de chauffage (40) et la première zone de refroidissement (32), et sur le second cylindre (22) une seconde zone de chauffage (42), une seconde zone de refroidissement (34) ainsi qu'une seconde conduite de trop plein (24) qui relie fluidiquement la seconde zone de chauffage (42) et la seconde zone de refroidissement (34), les conduite de trop plein (18, 24) étant respectivement montées de sorte qu'une liaison fluidique entre les zones de chauffage (40, 42) et les zones de refroidissement (32, 34) ne soient réalisés que dans la position de détente des pistons (26, 28), le premier et le second cylindres (16, 22) étant montés l'un derrière l'autre dans la direction longitudinale (L) et les zones de refroidissement (32, 34) ou les zones de chauffage (40, 42) étant voisines.
